# EUROPEAN PATENT APPLICATION

(11) **EP 4 498 503 A1**
(43) Date of publication of application: **29.01.2025**
(21) Application number: 23875110.1
(22) Date of filing: 18.09.2023
(51) Int. Cl.: H01M 50/519, H01M 50/531, H01M 50/107, H01M 50/572

(54) **CYLINDRICAL BATTERY CELL**

(30) Priority: 05.10.2022 KR 20220127384
(71) Applicant: LG Energy Solution, Ltd., Seoul 07335 (KR)
(72) Inventor: JEON, Ji Hye, Daejeon 34122 (KR)
(74) Representative: Plasseraud IP
(86) International application number: PCT/KR2023/014052
(87) International publication number: WO 2024/076042

(57) **Abstract**

The present disclosure provides a cylindrical battery cell including: a cylindrical electrode assembly including a first electrode and a second electrode; a PCB having a top surface on which at least one circuit component is mounted and including first and second connection pads connected to the first and second electrodes, respectively; a first metal plate configured to connect the first electrode and the first connection pad; and a second metal plate configured to connect the second electrode and the second connection pad. Here, as the first connection pad is formed on a bottom surface of the PCB, the first metal plate is connected to the bottom surface of the PCB.

## Description

### TECHNICAL FIELD

The present disclosure relates to a rechargeable battery, and more particularly, to a cylindrical battery cell disposed on an electrode assembly to increase space utilization of a printed circuit board (PCB) to which a circuit component such as a safety element is mounted.

### BACKGROUND ART

A rechargeable secondary battery, i.e., a battery, is widely used as an energy source for mobile devices such as smartphones. Also, the battery is used as an energy source for eco-friendly vehicles such as electric vehicles and hybrid electric vehicles, which are suggested as a solution for air pollution caused by gasoline and diesel vehicles using a fossil fuel. The kinds of applications that use the battery become extremely diversified, and the battery will be applied to more fields and products in the future.

The currently widely used kinds of the battery include a lithium-ion battery, a lithium polymer battery, a nickel-cadmium battery, a nickel-hydrogen battery, and a nickel-zinc battery. The above-described unit battery cell has an operating voltage of approximately 2.5V to 4.5V. Thus, when a higher output voltage is required, a battery pack is formed by connecting a plurality of battery cells in series. Alternatively, a battery pack may be formed by connecting a plurality of battery cells in parallel according to a charge and discharge capacity required for the battery pack. Thus, the number and electrical connection types of the battery cells contained in the battery pack may be variously set according to the required output voltage and/or the charge and discharge capacity.

On the other hand, cylindrical, prismatic, and pouch-type battery cells are widely known as the kinds of the battery cells. Each of the cylindrical battery cell and prismatic battery cell has a shape in which an electrode assembly is disposed in a cylindrical or prismatic metal can, and the pouch-shaped battery cell has a shape in which an electrode assembly is disposed in a pouch-type case of an aluminum laminate sheet. Here, in case of the cylindrical battery cell, a separation membrane that is an insulator is disposed between a positive electrode and a negative electrode and wound to form a jelly roll-shaped electrode assembly. Also, the cylindrical battery cell is formed by inserting the electrode assembly together with an electrolyte in the battery can and sealing an opening of the battery can by using a cap.

However, as all sorts of combustible materials are disposed in the battery cell, safety becomes vulnerable due to a risk of heat generation and explosion caused by overcharge, overcurrent, and other physical external impacts. Thus, at least one safety element such as a positive temperature coefficient (PTC) element and a protection circuit module (PCM) is connected to the battery cell to effectively control an abnormal state such as overcharge and overcurrent. Here, the safety element is mounted onto a printed circuit board (PCB) and connected to the battery cell.

The PCB onto which the safety element is mounted is provided on an upper side of the cylindrical battery cell, i.e., on the electrode assembly. Also, the PCB is connected through an electrode and a metal plate of the cylindrical battery cell. That is, each of the positive electrode and the negative electrode of the electrode assembly may be electrically connected to a connection pad of the PCB through the metal plate. Here, the metal plate is soldered to a top surface of the PCB to electrically connect the battery cell and the PCB. That is, two metal plates connected to the positive electrode and the negative electrode of the electrode assembly may be soldered to the top surface of the PCB while being spaced a predetermined distance from each other. However, there is a problem in that space utilization of the PCB is reduced because the metal plate is soldered to the top surface of the PCB. That is, there is a problem in that a space of the top surface of the PCB is decreased as much as an area of the metal plate soldered to the top surface of the PCB, and thus, a mounting area of a circuit component is reduced.

The related art is as follows.

Korean Patent Publication No. 10-2022-0095139

### DISCLOSURE OF THE INVENTION

### TECHNICAL PROBLEM

The present disclosure provides a cylindrical battery cell capable of increasing space utilization of a PCB on which a circuit component such as a safety element is mounted.

The present disclosure also provides a cylindrical battery cell capable of increasing space utilization by increasing a mounting area of a circuit component of a top surface of a PCB.

The present disclosure provides a cylindrical battery cell capable of increasing a space of a top surface of a PCB by surface-mounting, to a bottom surface of the PCB, at least a portion of a metal plate that connects an electrode of a battery cell to the PCB.

### TECHNICAL SOLUTION

In accordance with an exemplary embodiment, a cylindrical battery cell includes: a cylindrical electrode assembly including a first electrode and a second electrode; a printed circuit board (PCB) having a top surface on which at least one circuit component is mounted and including first and second connection pads connected to the first and second electrodes, respectively; a first metal plate configured to connect the first electrode and the first connection pad; and a second metal plate configured to connect the second electrode and the second connection pad, in which as the first connection pad is formed on a bottom surface of the PCB, the first metal plate is connected to the bottom surface of the PCB.

The first connection pad may be formed as a conductive pattern connected to the first metal plate mounted to the bottom surface of the PCB is exposed from the bottom surface of the PCB.

The first connection pad may be formed at both sides in one direction or formed at both sides in the other direction perpendicular to the one direction by using a through-hole of the PCB as a center.

The first connection pad may have a predetermined width along a through-hole of the PCB.

The first metal plate may be surface-mounted to the bottom surface of the PCB and connected to the first connection pad.

The PCB may be assembled to an upper portion of the electrode assembly while the first metal plate is mounted to the bottom surface.

As the second connection pad is formed on the top surface of the PCB, the second metal plate may be connected to the top surface of the PCB.

As the second connection pad is formed on the bottom surface of the PCB, the second metal plate may be connected to the bottom surface of the PCB.

The second metal plate may be connected to the second connection pad through a side surface of the electrode assembly.

### ADVANTAGEOUS EFFECTS

The cylindrical battery cells in accordance with the exemplary embodiments may increase the space utilization of the top surface of the PCB in comparison with the related art as at least one of the metal plates is connected to the bottom surface of the PCB. That is, the circuit component is mounted to the top surface of the PCB, at least one of the first and second connection pads is formed on the bottom surface of the PCB, and the first and second metal plates each extending from the positive and negative electrode terminals of the first electrode assembly are connected to the first and second connection pads, respectively. In other words, at least one of the first and second metal plates is connected to the bottom surface of the PCB.

Thus, in accordance with the exemplary embodiment, the space for forming the connection pad on the top surface of the PCB may be reduced compared to the related art in which the first and second connection pads are formed on the top surface of the PCB, and thus the space for mounting the circuit component may be increased. Thus, the space utilization of the PCB may be increased.

### BRIEF DESCRIPTION OF THE DRAWINGS

FIG. 1 is a cross-sectional view illustrating a cylindrical battery cell in accordance with an exemplary embodiment.
FIGS. 2 and 3 are schematic views illustrating top and bottom surfaces of a printed circuit board (PCB) of the cylindrical battery cell in accordance with an exemplary embodiment.
FIG. 4 is a cross-sectional view illustrating a cylindrical battery cell in accordance with another exemplary embodiment.
FIGS. 5 and 6 are schematic views illustrating top and bottom surfaces of a PCB of the cylindrical battery cell in accordance with another exemplary embodiment.
FIG. 7 is a schematic view illustrating one surface of a PCB for explaining various modified examples of a connection pad formed on the PCB in accordance with exemplary embodiments.

### MODE FOR CARRYING OUT THE INVENTION

Hereinafter, specific embodiments will be described in detail with reference to the accompanying drawings. The present invention may, however, be embodied in different forms and should not be construed as limited to the embodiments set forth herein. Rather, these embodiments are provided so that the present invention will be thorough and complete, and will fully convey the scope of the present invention to those skilled in the art.

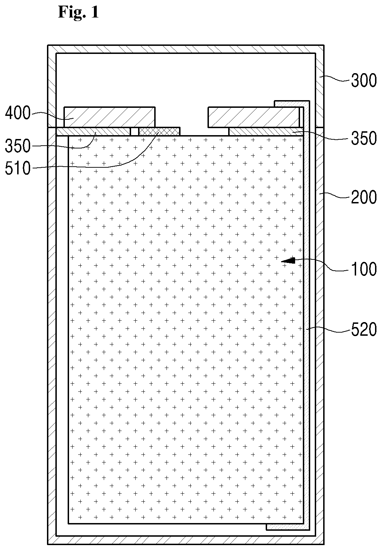

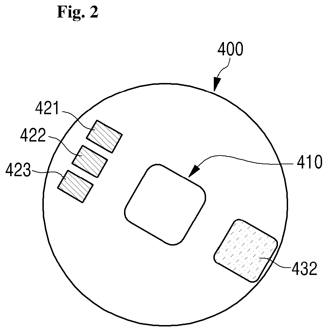

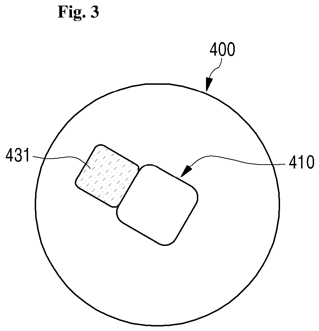

FIG. 1 is a cross-sectional view illustrating a cylindrical battery cell in accordance with an exemplary embodiment. Also, FIGS. 2 and 3 are schematic views illustrating top and bottom surfaces of a printed circuit board of the cylindrical battery cell in accordance with an exemplary embodiment.

Referring to FIG. 1, the cylindrical battery cell in accordance with an exemplary embodiment may include: an electrode assembly 100 including a first electrode and a second electrode; a battery can 200 accommodating the electrode assembly 100; a battery cap 300 disposed on an opening of the battery can 200 to seal the electrode assembly 100 in the battery can 200; a printed circuit board (PCB) 400 which is disposed above the electrode assembly 100 and to which a circuit component including a safety element is mounted; and a metal plate which electrically connects the electrode assembly 100 and the PCB 400 and has at least a portion connected to a bottom surface of the PCB 400. Also, the cylindrical battery cell may further include an insulating plate 350 disposed between the PCB 400 and the electrode assembly 100. That is, in the cylindrical battery cell in accordance with an exemplary embodiment, at least one of the metal plates connected to each of the first and second electrodes of the electrode assembly 100 is connected to the bottom surface of the PCB 400. The cylindrical battery cell in accordance with an exemplary embodiment will be described in more detail for each component as follows.

### 1. Electrode assembly

The electrode assembly 100 may include a first electrode, a second electrode, and a separation membrane disposed therebetween. Here, one of the first and second electrodes may be a positive electrode, and the other may be a negative electrode. For example, the electrode assembly 100 may include: a positive electrode plate formed by applying a positive electrode active material to a positive electrode current collector; a negative electrode plate formed by applying a negative electrode active material to a negative electrode current collector; and a separation membrane disposed between the positive electrode plate and the negative electrode plate to prevent short circuit between the two plates and allow lithium ions to move. Here, one of the first and second electrodes may be a positive electrode plate, and the other may be a negative electrode plate. For example, the positive electrode plate may be the first electrode, and the negative electrode plate may be the second electrode. The electrode assembly 100 may have, e.g., a jelly-roll structure. That is, the electrode assembly 100 may be manufactured by laminating the positive electrode plate and the negative electrode plate with the separation membrane therebetween at least once to form a laminate and winding the laminate around a central portion of the winding. Also, an additional separation membrane may be disposed on an outer circumferential surface of the electrode assembly 100 for insulation from the battery can 200.

The positive electrode plate may include a positive electrode current collector and a positive electrode active material applied onto one surface or both surfaces of the positive electrode current collector. Here, a positive electrode uncoated portion to which the positive electrode active material is not applied is formed on the positive electrode plate. The positive electrode uncoated portion is disposed at an upper portion in a height direction of the electrode assembly 100 accommodated in the battery can 200. That is, the positive electrode current collector may include the positive electrode uncoated portion to which the positive electrode active material is not applied and which is disposed at an end of a long side thereof and exposed to the outside of the separation membrane, and a portion of the positive electrode uncoated portion itself may be used as a positive electrode terminal. Alternatively, the positive electrode terminal (i.e., first electrode terminal) may be bonded to the positive electrode uncoated portion. Here, the positive electrode terminal may be bonded to the positive electrode uncoated portion by, e.g., welding.

The positive electrode current collector may be made of metal. For example, the positive electrode current collector may be made of stainless steel, nickel, aluminum, titanium, or an alloy thereof. As another example, the positive electrode current collector may be made of aluminum or stainless steel that is surface-treated with carbon, nickel, titanium, or silver. Also, the positive electrode current collector that is made of the above-described materials may be provided in the form of foil, a film, a sheet, a punched material, a porous material, and a foaming agent.

The positive electrode active material that is a material capable of absorbing or desorbing lithium ions may include at least one selected from a complex oxide with lithium, cobalt, manganese, and nickel. For example, the positive electrode active material may include an alkali metal compound represented by a general chemical formula of A[AₓM_{y}]O_{2+z} (A includes at least one selected from Li, Na, and K; M includes at least one selected from Ni, Co, Mn, Ca, Mg, Al, Ti, Si, Fe, Mo, V, Zr, Zn, Cu, Sc, Ru, and Cr; x≥0, 1≤x+y≤2, -0.1≤z≤2; and stoichiometric coefficients x, y and z are chosen so that the compound remains electrically neutral). As another example, the positive electrode active material may include an alkali metal compound represented by a general chemical formula of xLiM¹O₂-(1-x)Li₂M²O₃ (M¹ includes at least one element with an average oxidation state of 3; M² includes at least one element with an average oxidation state of 4; and 1≤x≤1). As another example, the positive electrode active material may include a lithium metal phosphate represented by a general chemical formula of LiaM¹xFe₁xM²yP₁-yM³zO_{4-z} (M¹ includes at least one element selected from Ti, Si, Mn, Co, Fe, V, Cr, Mo, Ni, Nd, Mg, and Al; M² includes at least one element selected from Ti, Si, Mn, Co, Fe, V, Cr, Mo, Ni, Nd, Al, Mg, As, Sb, Si, Ge, V and S; M³ includes a halogen element selectively containing F; 0<a≤2, 0≤x≤1, 0≤y<1, 0≤z<1; stoichiometric coefficients a, x, y and z are chosen so that the compound remains electrically neutral) or Li₃M₂ (PO₄)₃ (M includes at least one element selected from Ti, Si, Mn, Fe, Co, V, Cr, Mo, Ni, Mg and Al).

The negative electrode plate may include a negative electrode current collector and a negative electrode active material applied onto one surface or both surfaces of the negative electrode current collector. Here, a negative electrode uncoated portion to which the negative electrode active material is not applied is formed on the negative electrode plate. The negative electrode uncoated portion is disposed at a lower portion in the height direction of the electrode assembly 100 accommodated in the battery can 200. That is, the positive electrode uncoated portion and the negative electrode uncoated portion are disposed at the upper portion and the lower portion in the height direction of the electrode assembly 100, respectively. That is, the negative electrode current collector may include the negative electrode uncoated portion to which the negative electrode active material is not applied and which is disposed at an end of a long side thereof and exposed to the outside of the separation membrane, and a portion of the positive electrode uncoated portion itself may be used as a negative electrode terminal. Alternatively, the negative electrode terminal (i.e., second electrode terminal) may be bonded to the negative electrode uncoated portion. Here, the negative electrode terminal may be bonded to the negative electrode uncoated portion by, e.g., welding.

The negative electrode current collector may be made of metal. For example, the negative electrode current collector may be made of stainless steel, nickel, copper, titanium, or an alloy thereof. As another example, the negative electrode current collector may be made of copper or stainless steel that is surface-treated with carbon, nickel, titanium, or silver. Also, the negative electrode current collector that is made of the above-described materials may be provided in the form of foil, a film, a sheet, a punched material, a porous material, and a foaming agent.

The negative electrode active material that is a material capable of absorbing or desorbing lithium ions may include a carbon material such as crystalline carbon, amorphous carbon, a carbon composite, and a carbon fiber, lithium metal, and a lithium alloy. That is, the negative electrode plate that is the negative electrode current collector may use the same material as the positive electrode current collector of the positive electrode plate, and the negative electrode active material may be different from the positive electrode active material. For example, the negative electrode active material may include a carbon material, lithium metal or a lithium metal compound, silicon or a silicon compound, and tin or a tin compound. A metal oxide such as TiO₂ and SnO₂ having a potential less than 2V may be also used as the negative electrode active material. Both low-crystalline carbon and/or high-crystalline carbon may be used as the carbon material.

The separation membrane is made of a thermoplastic resin such as polyethylene (PE) and polypropylene (PP), and a surface of the separation membrane has a porous membrane structure. The above-described porous membrane structure may become an insulating film by the separation membrane is melted and clogged when a temperature in the battery rises to about a melting point of the thermoplastic resin. As the separation membrane is changed to the insulating film, a movement of lithium ions between the positive electrode plate and the negative electrode plate may be blocked, and a current may not flow therebetween. Thus, the rise of the temperature in the battery may be stopped.

The separation membrane may be obtained by using a single porous polymer film or laminating a porous polymer film made of, e.g., a polyolefin polymer such as an ethylene homopolymer, a propylene homopolymer, an ethylene/butene copolymer, an ethylene/hexene copolymer, and an ethylene/methacrylate copolymer. As another example, the separation membrane may use a conventional porous nonwoven fabric, e.g., a nonwoven fabric made of a glass fiber and a polyethylene terephthalate fiber, each of which has a high melting point.

A coating layer of inorganic particles may be formed on at least one surface of the separation membrane. Also, the coating layer of inorganic particles itself may be used as the separation membrane. The particles of the coating layer may have a structure combined with a binder so that an interstitial volume exists between adjacent particles. The inorganic particles may be made of an inorganic material having a dielectric constant of 5 or more. For example, the inorganic particles may include at least one material selected from the group consisting of Pb(Zr,Ti)O₃(PZT), Pb₁₋ₓLaxZr_{1-y}Ti_{y}O₃(PLZT), PB(Mg₃Nb_{2/3})O₃-PbTiO₃(PMN-PT), BaTiO₃, hafnia(HfO₂), SrTiO₃ , TiO₂, Al₂O₃, ZrO₂, SnO₂, CeO₂, MgO, CaO, ZnO, and Y₂O₃.

### 2. Battery can

The battery can 200 that is an approximately cylindrical container having an opened upper end accommodates the electrode assembly 100 and an electrolyte solution. That is, the battery can 200 is manufactured in a shape having an opened upper portion and a closed side surface and lower portion (i.e. bottom portion) to accommodate the electrode assembly 100 and the electrolyte solution. Here, the lower portion and the side surface of the battery can 200 may be integrated with each other or provided separately and coupled to each other by welding. The battery can 200 may be made of a conductive material such as, e.g., metal. The battery can 200 may be made of a light and ductile metal material, e.g., aluminum, an aluminum alloy, stainless steel, steel, or nickel-plated steel.

Also, the battery can 200 may have different thicknesses for each position. For example, the battery can 200 may have a thickness of the side surface less than that of the bottom portion. Since the electrode assembly 100 may have a larger diameter when the side surface is thin, the thin side surface may be advantageous in terms of energy density.

The bottom portion of the battery can 200 may have a thickness of, e.g., 0.4 mm to 1.2 mm, and more preferably 0.6 mm to 1.0 mm. When the bottom portion of the battery can 200 has an extremely small thickness, the battery can 200 may be deformed in case of internal pressure increase or during welding. On the contrary, when the bottom portion of the battery can 200 has an extremely great thickness, the battery can 200 may be difficult to be processed, and loss of energy density may be increased. Thus, the thickness of the bottom portion of the battery can 200 is required to be managed at an appropriate level.

Also, a sidewall portion of the battery can 200, which forms an outer circumferential surface, may have a thickness of, e.g., 0.3 mm to 0.8 mm, and more preferably 0.4 mm to 0.6 mm. When the sidewall portion of the battery can 200 has an extremely small thickness, a possibility in which fire spreads to adjacent cylindrical battery cells when the cylindrical battery cell ignites or explodes is increased. For example, when ignition or explosion occurs as an abnormality occurs in some of the cylindrical battery cells in a battery pack including a plurality of cylindrical battery cells, a pin hole may be generated when the sidewall portion of the battery can 200 has an extremely small thickness, and thus a risk of chain ignition and explosion may be increased. On the contrary, when the sidewall portion of the battery can 200 has an extremely great thickness, the battery can 200 may be difficult to be processed, and loss of energy density may be increased. Thus, the thickness of the sidewall portion of the battery can 200 is required to be managed at an appropriate level. Also, a plating layer may be formed on the battery can 200. In this case, the plating layer may include, e.g., nickel (Ni). The plating layer may have a thickness of 1.5 µm to 6.0 µm.

### 3. Battery cap

The battery cap 300 may be made of a metal material. Since the battery cap 300 is made of the metal material, rigidity of the cylindrical battery cell may be secured. The battery cap 300 seals an opening formed at the upper end of the battery can 200. That is, the battery cap 300 forms a top surface of the cylindrical battery cell. Here, the battery cap 300 may not have a polarity even when made of a conductive metal material. Thus, the battery cap 300 is not electrically connected to the electrode assembly 100. When the battery cap 300 is not electrically connected to the electrode assembly 100 as described above, the battery cap 300 does not function as the positive terminal or the negative terminal. That is, the battery cap 300 is not necessary to be electrically connected to the electrode assembly 100 and the battery can 200 and is not necessarily made of the conductive metal material.

Also, a sealing gasket (not shown) may be disposed between the battery cap 300 and the battery can 200 to seal the opening defined at the upper end of the battery can 200 and electrically insulate the battery can 200 from the battery cap 300. The sealing gasket may include a material having an insulation property and an elastic property. The sealing gasket may include, e.g., a polymeric resin. The battery cap 300 may have a protruding portion that protrudes upward from approximately a central portion thereof. Also, the battery cap 300 may further include a venting portion formed to prevent internal pressure from increasing beyond a set value due to a gas generated in the battery can 200. The set value of the internal pressure may be approximately 15 kgf/cm to 35 kgf/cm. The venting portion corresponds to an area having a thickness less than that of a surrounding area in the battery cap 300. The venting portion is structurally more vulnerable than the surrounding area. Thus, when an abnormality occurs in the cylindrical battery cell and the internal pressure of the battery can 200 is increased above a certain level, the venting portion is broken, and the gas generated in the battery can 200 is discharged. The venting portion may be formed, e.g., by notching one surface or both surfaces of the battery cap 300 to partially reduce a thickness of the battery cap 300.

### 4. Printed circuit board (PCB)

The printed circuit board (PCB) 400 is disposed above the electrode assembly 100 in the battery can 200. Here, the insulating plate 350 may be disposed between the PCB 400 and the electrode assembly 100. As the insulating plate 350 is disposed on the electrode assembly 100 and the PCB 400 is disposed thereon, the electrode assembly 100 and the PCB 400 may be insulated from each other. The PCB 400 has an approximately cylindrical battery cell shape. Also, the PCB 400 has a size corresponding to that of the electrode assembly 100. That is, the PCB 400 may have an approximately circular plate shape having a predetermined thickness and a size corresponding to that of the electrode assembly 100. Also, a through-hole 410 is defined in a central portion of the PCB 400. That is, the through-hole 410 may be defined in an area corresponding to a winding central portion of the electrode assembly 100.

This PCB 400 may include at least one insulating layer and at least one conductive pattern. The insulating layer of the PCB 400 may be made of ceramic, an organic-inorganic composite material, or a glass fiber impregnated material. When the insulating layer includes a polymer resin, the insulating layer may include an epoxy-based insulating resin such as FR-4, bismaleimide triazine (BT), and an ajinomoto build up film (ABF). Alternatively, the insulating layer may include a polyimide-based resin. On the other hand, when the insulating layer is formed by laminating a plurality of layers, all of the plurality of insulating layers may be made of the same material, or at least one of the insulating layers may be made of a different material. Also, the conductive pattern may have a predetermined shape on at least one surface of the insulating layer. For example, the conductive pattern may be formed on each of one surface and the other surface of the insulating layer by using a copper clad laminate (CCL) in which a conductive layer is formed and patterning the conductive layer on the insulating layer. Alternatively, the conductive pattern may be formed on each of the one surface and the other surface of the insulating layer by performing a plating process. When the plurality of insulating layers are laminated, the conductive pattern may be formed on each of one surface and the other surface of a central insulating layer, upper and lower insulating layers are formed on upper and lower portions of the central insulating layer, and a conductive pattern having a predetermined shape may be formed on each of one surface (e.g., top surface) of the upper insulating layer and one surface (e.g., bottom surface) of the lower insulating layer. The conductive pattern on the upper and lower insulating layers may be formed by patterning the conductive layer or by performing a plating process on the insulating layer to form a predetermined pattern. As described above, the PCB 400 may be configured by forming the conductive pattern having a predetermined shape on a surface of the insulating layer and laminating the plurality of insulating layers on which the conductive pattern is formed. The PCB 400 may be formed as a single-sided board, a double-sided board, and a multilayer board depending on the number of laminated layers of the insulating layers and the conductive patterns. Since the PCB having the large number of the laminated layers has excellent mounting force of electronic components and is used for high-precision products, the number of layers may be selected depending on the number and integration of the components mounted to the PCB.

As illustrated in FIG. 2, a plurality of circuit components (421, 422, and 423 may be mounted to a top surface of the PCB 400. The circuit component 420 may include at least one safety element such as a positive temperature coefficient (PTC) element 421 and a protection circuit module (PCM) 422 to effectively control an abnormal state such as overcharge and overcurrent. The PTC element 421 has resistance that is increased significantly when abnormal heat is generated due to overcharging or internal short circuit of the battery to block an internal circuit of the battery. Also, the circuit component may include an electric circuit element 423 including an element such as a control IC, a charge and discharge switch, and a temperature fuse.

Also, connection pads 431 and 432 to which metal plates 510 and 520 are connected may be disposed on the top and bottom surfaces of the PCB 400, respectively. That is, a first connection pad 431 connected to the first metal plate 510 may be disposed on the bottom surface of the PCB 400, and a second connection pad 432 connected to the second metal plate 520 may be disposed on the top surface of the PCB 400. The first metal plate 510 is connected to the positive electrode plate or the positive electrode terminal of the electrode assembly 100, and the second metal plate 520 is connected to the negative electrode plate or the negative electrode terminal of the electrode assembly 100. That is, the PCB 400 in accordance with an exemplary embodiment has the bottom surface connected to the positive electrode terminal through the first metal plate 510 and the top surface connected to the negative terminal through the second metal plate 520. Here, the first connection pad 431 is formed as a conductive pattern, which is electrically connected to the first metal plate 510 mounted to the bottom surface of the PCB 400 and is exposed from the bottom surface of the PCB 400. Also, the conductive pattern electrically connected to the first metal plate 510 may be electrically connected in one direction of the first metal plate 510 or electrically connected in both directions of the first metal plate 510. On the other hand, the first connection pad 431 is disposed adjacent to the through-hole 410, and the second connection pad 432 is disposed away from the through-hole 410. However, positions of the first and second connection pads 431 and 432 may be variously changed so that the first connection pad 431 is formed on the bottom surface of the PCB 400 and the second connection pad 432 is formed on the top surface of the PCB 400. As the first connection pad 431 is formed on the bottom surface of the PCB 400, a predetermined conductive pattern may be formed in the PCB 400 for electrical connection with the circuit component mounted to the top surface of the PCB 400. That is, the conductive pattern may be formed in the PCB 400 to connect the first connection pad 431 disposed on the bottom surface of the PCB 400 and the circuit component disposed on the top surface of the PCB 400. To this end, the conductive pattern may pass through at least one insulating layer. As the first and second connection pads 431 and 432 each of which is connected to the metal plate are formed on the top and bottom surfaces of the PCB 400, respectively, an area of the connection pad on the top surface of the PCB 400 may be decreased more than that of the related art, and thus space utilization of the PCB 400 may be increased. That is, in the related art, as the first and second connection pads are formed on the top surface of the PCB 400, the space utilization of the PCB 400 is decreased.

### 5. Metal plate

The metal plate is provided to connect the electrode assembly 100 and the PCB 400. This metal plate may includes a first metal plate 510 for connecting the positive electrode terminal or positive electrode plate of the electrode assembly 100 to the PCB 400 and a second metal plate 520 for connecting the negative electrode terminal or negative electrode plate of the electrode assembly 100 to the PCB 400. The first metal plate 510 connects the positive electrode plate or positive electrode terminal disposed above the electrode assembly 100 to the bottom surface of the PCB 400. That is, the positive electrode plate of the electrode assembly 100 is connected to the first connection pad 431 disposed on the bottom of the PCB 400 through the first metal plate 510 and thus connected to the PCB 400. Here, the first metal plate 510 is connected on the first connection pad 431 through surface mount technology (SMT). Also, the second metal plate 520 connects the negative electrode terminal or negative electrode plate disposed below the electrode assembly 100 to the top surface of the PCB 400. That is, the negative electrode plate of the electrode assembly 100 is connected to the second connection pad 432 disposed on the top of the PCB 400 through the second metal plate 520 and thus connected to the PCB 400. To this end, the second metal plate 520 passes through a side surface of the electrode assembly 100 and is connected to the PCB 400 through the second connection pad 432 disposed on the top surface of the PCB 400. That is, the second metal plate 520 extends from the negative electrode plate below the electrode assembly 100 to the second connection pad 432 disposed on the top surface of the PCB 400 along the side surface of the electrode assembly 100. Here, since the separation membrane may be formed at an outermost portion of the electrode assembly 100, the second metal plate 520 may be insulated from the positive or negative electrode plate of the electrode assembly 100, and since an insulating material may be also applied to the inner surface of the battery can 200, the second metal plate 520 may be also insulated from the battery can 200. On the other hand, the PCB 400 may be assembled to the upper portion of the electrode assembly 100 while the first metal plate 510 is mounted on the bottom surface of the PCB 400.

As described above, in the cylindrical battery cell in accordance with an exemplary embodiment, as the metal plate is connected to each of the top and bottom surfaces of the PCB 400, the space utilization of the top surface of the PCB 400 may be increased in comparison with the related art. That is, in an exemplary embodiment, the first and second connection pads 431 and 432 are formed on the bottom and top surfaces of the PCB 400, respectively, and the first and second metal plates 510 and 520 extending from the positive and negative electrode terminals of the electrode assembly 100 are connected to the first and second connection pads 431 and 432, respectively. Thus, in accordance with an exemplary embodiment, a space for forming the connection pad on the top surface of the PCB 400 may be reduced compared to the related art in which the first and second connection pads are formed on the top surface of the PCB 400, and thus a space for mounting the circuit component may be increased. Thus, the space utilization of the PCB 400 may be increased.

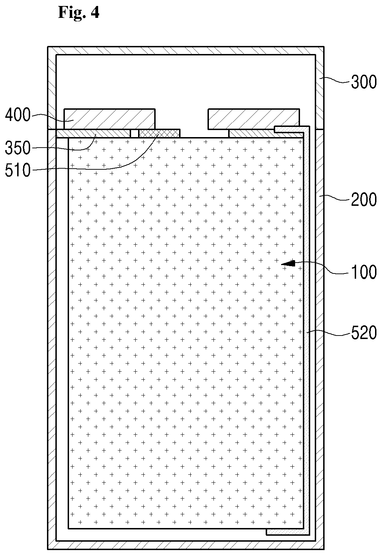

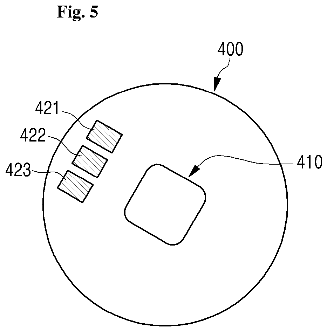

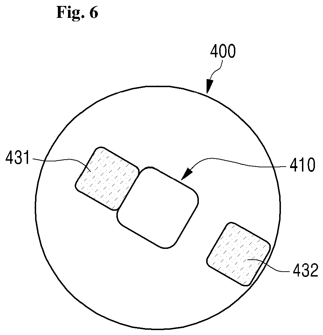

FIG. 4 is a cross-sectional view illustrating a cylindrical battery cell in accordance with another exemplary embodiment. Also, FIGS. 5 and 6 are schematic views illustrating top and bottom surfaces of a printed circuit board of the cylindrical battery cell in accordance with another exemplary embodiment. As illustrated in FIGS. 4 to 6, in the cylindrical battery cell in accordance with another exemplary embodiment, a second metal plate 520, which is connected to a lower portion of an electrode assembly 100, i.e., a negative electrode terminal of the electrode assembly 100, is mounted to a bottom surface of a PCB 400. That is, in accordance with another exemplary embodiment, first and second metal plates 510 and 520 may be connected to the bottom surface of the PCB 400, and to this end, first and second connection pads 431 and 432 connected to first and second metal plates 510 and 520, respectively, may be spaced apart from each other on the bottom surface of the PCB 400. All components except for the above-described features are the same as those described in an exemplary embodiment.

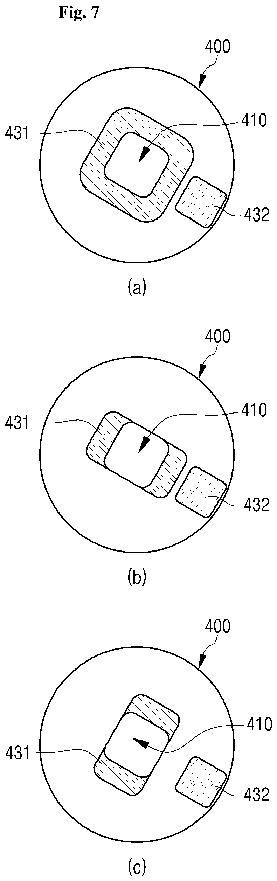

On the other hand, the connection pad to which the metal plate in accordance with an exemplary embodiment is connected may be deformed into various shapes. That is, the first connection pad 431 formed on the bottom surface of the PCB 400 and connected to the first metal plate 510 may be formed to have a predetermined width along the through-hole 410 of the PCB 400 as illustrated in (a) of FIG. 7, formed at both sides of one direction by using the through-hole 410 as a center as illustrated in (b) of FIG. 7, or formed at both sides of the other direction perpendicular to the one direction of (b) of FIG. 7 by using the through-hole 410 as a center as illustrated in (c) of FIG. 7. Here, the first connection pad 431 may be spaced apart from the second connection pad 432. Alternatively, various modifications of the first connection pad 431 illustrated in FIG. 7 may be also applied to an exemplary embodiment described by using FIGS. 2 and 3. That is, even when the first connection pad 431 is formed on the bottom surface of the PCB 400 and the second connection pad 432 is formed on the top surface of the PCB 400, the first connection pad 431 may be deformed into various shapes as illustrated in FIG. 7. Also, various deformed shapes may be also applied to the second connection pad 432. That is, the second connection pad 432 may be formed to have a predetermined width along the through-hole 410, formed at both sides of one direction by using the through-hole 410 as a center, and formed at both sides of the other direction perpendicular to the one direction by using the through-hole 410 as a center. When the second connection pad 432 has the above-described shape, the first connection pad 431 may have a rectangular shape.

As described above, in the cylindrical battery cell in accordance with another exemplary embodiment, as the metal plate is connected to the bottom surface of the PCB 400, the space utilization of the top surface of the PCB 400 may be increased in comparison with the related art. That is, in another exemplary embodiment, the first and second connection pads 431 and 432 are formed on the bottom and top surfaces of the PCB 400, respectively, and the first and second metal plates 510 and 520 extending from the positive and negative electrode terminals of the electrode assembly 100 are connected to the first and second connection pads 431 and 432, respectively. Thus, in accordance with another exemplary embodiment, a space for forming the connection pad on the top surface of the PCB 400 may be reduced compared to the related art in which the first and second connection pads are formed on the top surface of the PCB 400, and thus a space for mounting the circuit component may be increased. Thus, the space utilization of the PCB 400 may be increased.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

The reference numerals used in the specification and drawings are as follows.

| | | | |
|---|---|---|---|
| 100: | Electrode assembly | 200: | Battery can |
| 300: | Battery cap | 400: | Printed circuit board |

## Claims

1. A cylindrical battery cell comprising:
a cylindrical electrode assembly comprising a first electrode and a second electrode;
a printed circuit board, PCB, having a top surface on which at least one circuit component is mounted and comprising a first connection pad connected to the first electrode and a second connection pad connected to the second electrode;
a first metal plate configured to connect the first electrode and the first connection pad; and
a second metal plate configured to connect the second electrode and the second connection pad,
wherein as the first connection pad is formed on a bottom surface of the PCB, the first metal plate is connected to the bottom surface of the PCB.

2. The cylindrical battery cell of claim 1, wherein the first connection pad is formed as a conductive pattern, which is connected to the first metal plate mounted to the bottom surface of the PCB and is exposed from the bottom surface of the PCB.

3. The cylindrical battery cell of claim 2, wherein the first connection pad is formed at both sides in one direction or formed at both sides in the other direction perpendicular to the one direction by using a through-hole of the PCB as a center.

4. The cylindrical battery cell of claim 2, wherein the first connection pad has a predetermined width along a through-hole of the PCB.

5. The cylindrical battery cell of claim 2, wherein the first metal plate is surface-mounted to the bottom surface of the PCB and connected to the first connection pad.

6. The cylindrical battery cell of claim 5, wherein the PCB is assembled to an upper portion of the electrode assembly while the first metal plate is mounted to the bottom surface.

7. The cylindrical battery cell of claim 6, wherein as the second connection pad is formed on the top surface of the PCB, the second metal plate is connected to the top surface of the PCB.

8. The cylindrical battery cell of claim 6, wherein as the second connection pad is formed on the bottom surface of the PCB, the second metal plate is connected to the bottom surface of the PCB.

9. The cylindrical battery cell of claim 7 or 8, wherein the second metal plate is connected to the second connection pad through a side surface of the electrode assembly.
